# EUROPEAN PATENT APPLICATION

(11) **EP 1 324 238 A1**
(43) Date of publication of application: **02.07.2003**
(21) Application number: 01912196.1
(22) Date of filing: 08.03.2001
(51) Int. Cl.: G06F 17/60

(54) **DISTRIBUTING METHOD**

(30) Priority: 08.09.2000 JP 2000272734
(71) Applicant: FUJITSU LIMITED, Kawasaki-shi, Kanagawa 211-8588 (JP); Nifty Corporation, Shingawa-ku, Tokyo 140-8544 (JP)
(72) Inventor: KITADAI, Shiro, FUJITSU LIMITED, Kawasaki-shi, Kanagawa 211-8588 (JP); ISHII, Kentaro, NIFTY Corporation, Shinagawa-ku, Tokyo 140-8544 (JP)
(74) Representative: Williams, Michael Ian
(86) International application number: JP0101821
(87) International publication number: WO02021359

(57) **Abstract**

A system for distributing contents to the terminals (23) of users through a network (22). Before the distribution, it is determined whether or not the contents can be distributed according to the information about the places to which the contents are distributed and the information about the places in which the contents are shown. Thus, a larger number of users can be provided with an opportunity to enjoy the contents without disordering the commercial domain of the showing movie theater for showing the contents.

## Description

### Technical Field

The present invention relates to a method for distributing contents through a network.

### Background Art

Conventionally, a part of the contents of film, etc. and images whose quality is somewhat reduced are distributed through a network such as Internet, etc. in advertising and other activities.

The contents of high-quality commercial images (for example, of movies, etc. formed by digital images of the quality as high as, or higher than, movie films, and the like) are distributed as a digital signal to a specific contract movie theater for showing. The running period of movies in each theater is independently set by each theater within the contract term between the film provider and each movie theater.

However, the above mentioned digital image is distributed using a digital signal instead of the film itself to a movie theater. Therefore, there has been the problem that film cannot be provided for a larger number of users at a reasonable price without infringing existing commercial domains.

The present invention has been developed to solve the above mentioned problems, and aims at providing an opportunity of enjoying contents for a larger number of users by distributing the contents while maintaining the order of the commercial domains of the existing movie theaters, etc.

### Disclosure of Invention

The present invention is based on the distributing system in which a server for distributing a content, etc., a terminal of a user, and a terminal of a movie provider are connected with one another through a network, and the server distributes the contents to the terminal of the user through the network.

To solve the above mentioned problems, according to the first aspect of the present invention, the server comprises a record unit, a determination unit, and a distribution unit. The record unit records the place for showing the contents and the place as a distribution destination. The determination unit determines whether or not the contents are to be distributed based on the place for showing the contents and the place as a distribution destination of the contents. The distribution unit distributes the contents to the distribution destination based on the determination result by the determination unit.

For example, the determination unit compares the place for showing the contents with the place as a distribution destination of the contents, and determines that the contents is not to be distributed when the area to which the place for showing the contents belongs and the area to which the place as a distribution destination belongs satisfy a predetermined condition, for example, when they belong to the same area.

Thus, users can be provided with an opportunity of enjoying the contents with the distribution of the contents suppressed when the distribution can disturb the commercial domains of an existing movie theaters, etc.

With the above mentioned configuration, the server can further include a fee setting unit for setting the distribution fee for the contents, and can be designed to set the distribution fee based on the place for showing the contents and the place as a distribution destination of the contents when the determination unit determines that the contents are to be distributed. For example, the fee setting unit can set the distribution fee sequentially from the highest fee to the lowest fee depending on the distance between the place for showing the contents and the place as a distribution destination of the contents, or the time required to travel from one place to another.

The fee setting unit can be configured to set a distribution fee based on the showing state of contents, for example, going to be shown in the near future, currently being shown, or having completed the showing.

The fee setting unit can also be configured to set a distribution fee based on the information about a user, for example, the information indicating that the user is older or younger than a predetermined age, the information indicating that the user deserves a complimentary event, etc.

The distribution unit can be configured to use, when distributing contents to the terminals of users, a stream distributing method of outputting contents while preventing the contents from being stored in the terminal of the users, a distributing method of storing contents in the terminals of the users while preventing the contents from being copied to other terminals than the terminals which have stored the contents, a distributing method of allowing contents to be output only once per distributing process, etc.

Furthermore, the above mentioned problems can also be solved by the method including the progression of the processes performed by each configuration of the present invention.

A computer-readable storage medium storing a program used to direct a computer to control the same functions as those performed by each configuration of the present invention, and a program product also relate to the present invention. The above mentioned problems can also be solved by allowing the program stored on the storage medium, etc. to be read and executed by the computer.

### Brief Description of Drawings

FIG. 1 shows the configuration of the distributing system according to the present invention;
FIG. 2 is a flowchart for explanation of the operation according to the present invention;
FIG. 3 is a flowchart (1) for explanation of the detailed operations according to the present invention;
FIG. 4 is a flowchart (2) for explanation of the detailed operations according to the present invention;
FIG. 5 is a flowchart (3) for explanation of the detailed operations according to the present invention;
FIG. 6 is a flowchart (4) for explanation of the detailed operations according to the present invention;
FIG. 7 shows an example of the data structure of a movie theater location master;
FIG. 8 shows an example of the data structure of a film master;
FIG. 9 shows an example of the data structure of a member information master;
FIG. 10 shows an example of the data structure of a showing movie theater master;
FIG. 11 shows an example of the data structure of a special member master;
FIG. 12 shows the configuration of a computer; and
FIG. 13 is an explanatory view of loading a program and data into a computer.

### Best Mode for Carrying Out the Invention

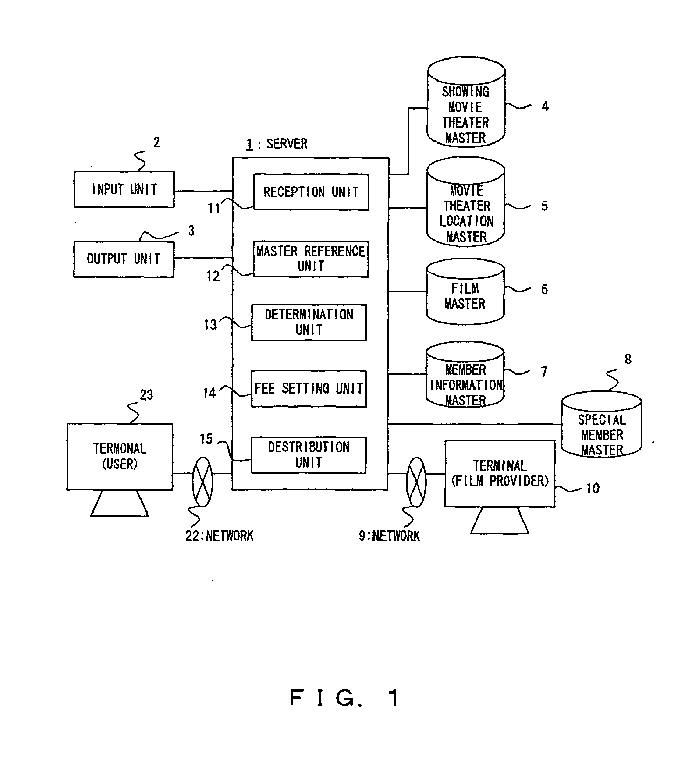

The embodiments of the present invention are described below by referring to the attached drawings. FIG. 1 shows the configuration of the distributing system according to the present invention. As shown in FIG. 1, a server 1 is connected to a terminal 10 of a film provider through a network 9. Similarly, the server 1 is connected to a terminal 23 of a user (client, member) through a network 22.

The network 22 is a network such as Internet, etc. A user is connected to the server 1 through the network 22 using the terminal 23 to enjoy the distributed contents.

The network 9 is a network such as Internet, etc. A film provider is connected to the server 1 through the network 9 using the terminal 10 to record and update various information (film title, information about a movie theater, etc.) in a master. For example, the film provider operates the terminal 10 to record the information such as the contents of film, etc., newly received contents, the possible running term of contents, etc. in each master, update the information, etc.

The server 1 obtains information about contents from the film provider through the network 9, and distributes the contents, for example, film, etc. to the terminal of the user through the network 22. The server 1 comprises an input unit 2, an output unit 3, a showing movie theater master 4, a movie theater location master 5, a film master 6, a member information master 7, a special member master 8, a reception unit 11, a master reference unit 12, a determination unit 13, a fee setting unit 14, and a distribution unit 15.

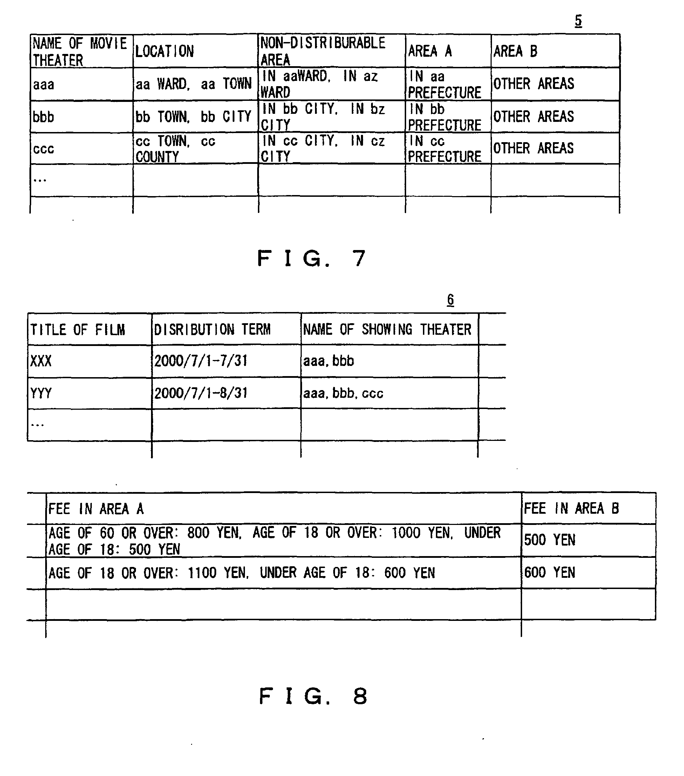

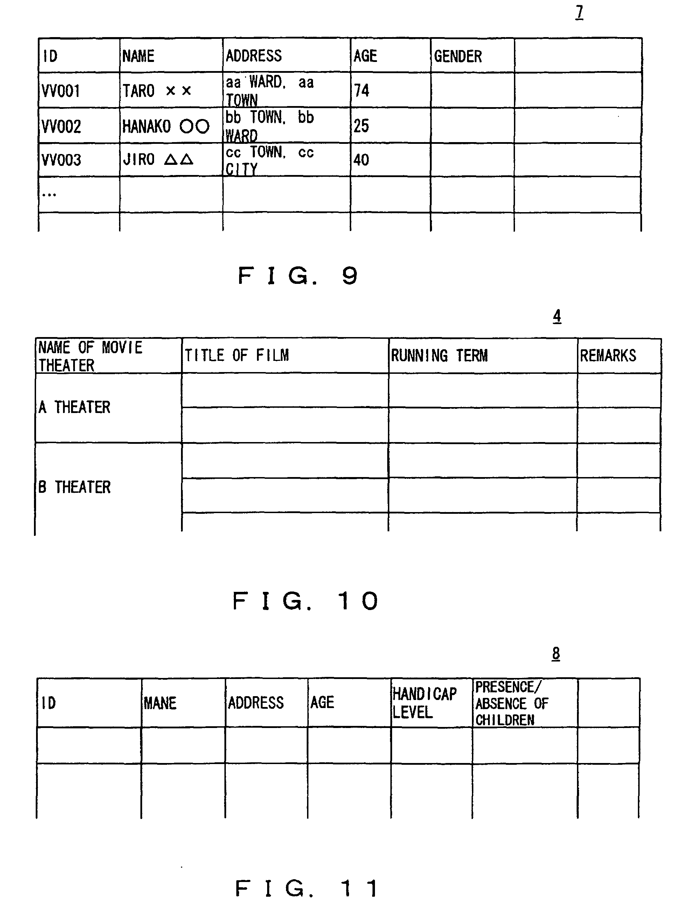

The showing movie theater master 4 stores the title of film on view, the running term, etc. as associated with a movie theater (FIG. 10). The movie theater location master 5 stores the location, the non-distributable area, etc. as associated with a movie theater (FIG. 7). The film master 6 stores the distribution term, the name of a showing movie theater, the fee for each area, age, etc. as associated with a film title (FIG. 8). The member information master 7 stores the name, address, age, gender, etc. of a member as associated with the ID of the member (FIG. 9). The special member master 8 stores the name, address, age, disability level, presence/absence of children, etc. as associated with the ID of a member (FIG. 11).

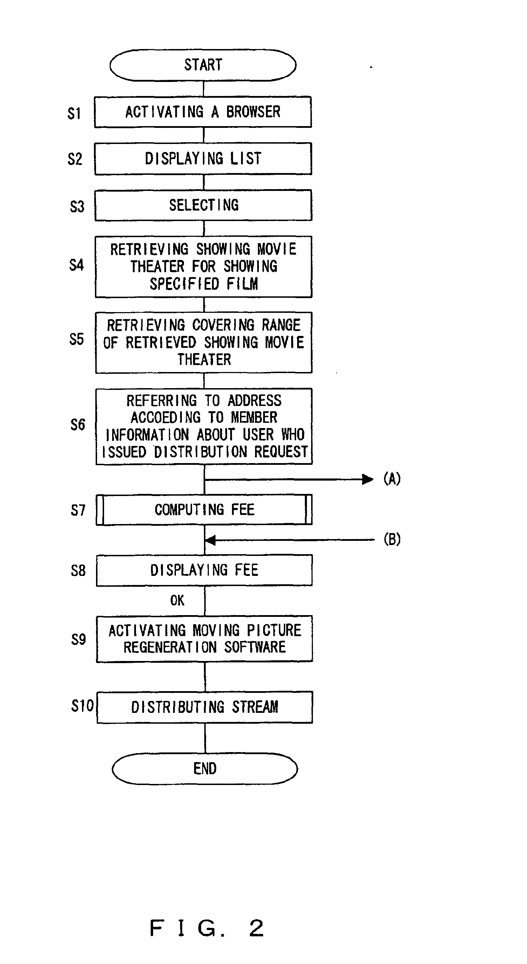

The reception unit 11 receives various data, etc. from a user (client). The master reference unit 12 refers to the masters 4 through 8 using the information, etc. received from a user, etc. as a retrieval key. The determination unit 13 makes various determinations (for example, compares the area of a movie theater with the address of the member, and determines 'in the area', 'near the area', 'distant from the area', etc.) based on the retrieval result obtained by the master reference unit 12 referring to the master (refer to the flowcharts shown in FIGS. 2 through 6). The fee setting unit 14 sets the fee for reception (distribution) of contents (for example, film), and notifies the terminal 23 of the set fee (refer to the flowcharts shown in FIGS. 2 through 6). The distribution unit 15 performs stream distribution of contents (for example, film) to the terminal 23, distributes the contents set in a non-copiable state, sets the contents to be replayed only on the terminal 23 which receives the contents, etc. The input unit 2 inputs various data into the server 1 and sets the data therein, inputs various instructions, etc., and can be a keyboard, a mouse, etc. The output unit 3 outputs (displays, prints out, file-outputs) data from the server 1.

The server 1 displays a list of contents on the user terminal 23 through the network 22. When the user selects or specifies contents from the list, the server 1 obtains the place to show the contents by referring to the masters, and obtains the address of the member by referring to the member information of the user. Then, the server 1 determines whether or not the contents are to be distributed based on the showing place and the address of the member, sets the fee, and displays the results on the user terminal 23 . When the user agrees with the payment of the fee, the server 1 distributes the contents to the user terminal 23.

Then, by referring to FIG. 2, the operations of the distribution system according to the present invention are described below in detail.

First, the user activates the browser, etc. and connects the terminal 23 to the server 1 through the network 22 (for example, Internet)(S1).

Then, the user selects the distribution of contents, for example, film from the initial menu (home page) to downloads and displays a list of film until the distribution right expiration date in Japan (S2), and selects a desired film title from the list of film displayed on the terminal 23 (or inputs (specifies) the film title and gives a notification) (S3) .

The reception unit 11 accepts the selection or specification of desired film from the user. The master reference unit 12 searches the film master 6 (FIG. 8) using the film title of the specified (selected) film as a retrieval key, and retrieves the name of a showing movie theater (S4).

The master reference unit 12 searches the movie theater location master 5 (FIG. 7) using the retrieved name of the movie theater as a retrieval key, and retrieves the area of the commercial domain of the movie theater, that is, the covering range (S5). For example, in the example shown in FIG. 7, the following information about the covering range of the movie theater 'aaa' is retrieved by referring to the movie theater location master 5 using the name of the movie theater 'aaa'.
· Location: Town aa in Ward aa
· Non-distributable area: in Ward aa, in Ward az
· Area A (vicinal area except the non-distributable area): in Prefecture aa
· Area B (distant area): other areas

Then, the master reference unit 12 searches the member information master 7 shown in FIG. 9 using the ID of the user (client) who issued a distribution request from the terminal 23 as a retrieval key, and retrieves the area to which the address of the member belongs (for example, Town aa in Ward aa).

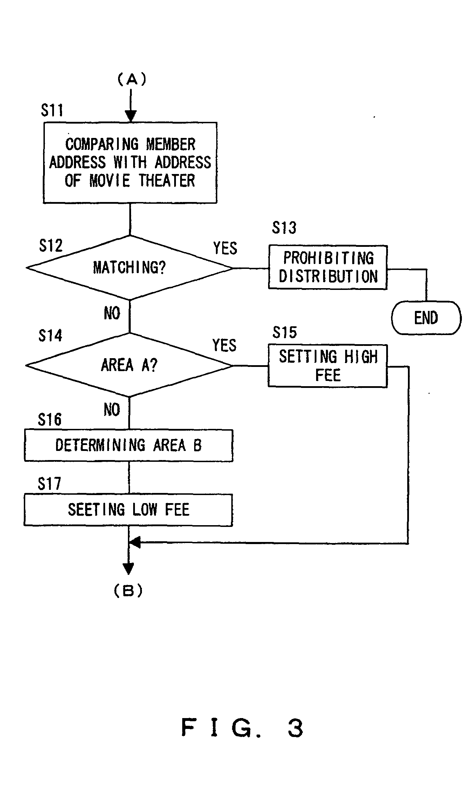

The determination unit 13 compares the area of the showing movie theater (covering range) of the film retrieved in S5 with the address of the member, and announces the prohibition of distribution if the non-distributable area matches the area to which the address of the member belongs. Otherwise, the determination unit 13 determines that contents can be distributed. When the determination unit 13 determines that contents can be distributed, the fee setting unit 14 sets a high fee when the address of the member refers to the vicinity of the location of the showing movie theater, a medium fee when the address refers to the medium distance from the location, and a low fee when the address refers to a long distance from the location (the fee is calculated and set depending on the flowcharts shown in FIGS. 3 through 6) (S7).

The fee setting unit 14 displays on the terminal 23 the fee computed in S7 as the fee for the distribution of the film (S8). When the user agrees with the payment of the fee, the user transmits the reply that the payment of the fee is accepted to the server 1, and control is passed to step S9.

The user activates the software such as moving picture payback software, for example, Media Player (registered trademark), Real Player (registered trademark), Quick Time (registered trademark), etc. operated on the browser activated in S1 on the terminal 23 (S9).

The distribution unit 15 distributes the digital signal of the film as the moving picture (movie) for moving picture software activated in S9 to the terminal 23 through the network 22 (for example, Internet).

The distribution unit 15 can perform what is called stream-distribution in which contents are not stored as data. It is also possible to store contents on a hard disk of the terminal 23 such that the contents cannot be copied to other appliances, but can be played back only by the terminal 23, read and displayed as moving pictures with the audio output simultaneously or after the distribution is carried out. Furthermore, the distribution can be performed such that contents can only be played back once per distribution. In any case, the user can enjoy the moving pictures and audio displayed and distributed on the screen of the terminal 23, or can play back on the terminal 23 the digital signals stored on the hard disk later to display moving pictures and output audio.

As described above, the user can activate a browser on the terminal 23, connect it to the server 1, obtain a list of contents (for example, a list of movies)from the home page of the server 1, and selects (or specifies) desired contents from the list. The server 1 retrieves a showing place of the contents selected (or specified) by the user (for example, the place of a movie theater), retrieves the address of the user from the member information about the user, compares them, computes the fee, and notifies the user of the computed fee. When the user agrees with the payment of the fee, the server 1 outputs the contents (for example, movies) to the terminal 23 through the stream distribution, etc. Thus, it is possible to set an appropriate fee and provide an opportunity to enjoy contents (movies) for a number of users without invading the commercial domain of a showing movie theater, etc. by utilizing the member information.

Sequentially described below in detail are the operations of distributing system. FIG. 3 is a flowchart (1) showing the detailed operations of the distributing system according to the present invention. The operations of determining the possibility of the distribution based on the address of a member and the location of a showing movie theater, and setting the distribution fee are described below in detail by referring to FIG. 3.

In FIG. 3, after the above mentioned process in S6 shown in FIG. 2, the determination unit 13 compares the address of the user retrieved from the member information master 7 based on the ID of the user with the location of the showing movie theater and a non-distributable area retrieved from the movie theater location master 5 based on the title of the contents (title of film) selected by the user (S11).

The determination unit 13 determines whether or not the address of the user retrieved from the member information master 7 shown in FIG. 9 matches the location of the movie theater showing the film selected by the user or the non-distributable area, which is retrieved from the movie theater location master 5 shown in FIG. 7 (S12). If YES, it is determined that the address of the user matches the location of the movie theater or the non-distributable area. Therefore, the determination unit 13 sets the prohibition of distribution (S13), and the message (for example, a message "Since the film is road-shown in the area of the user, it cannot be distributed through a network." is transmitted to the user, thereby terminating the process. If NO, control is passed to step S14.

If it is determined NO in S12, then the determination unit 13 determines whether or not the address of the user belongs to the area A (for example, the location of the movie theater or the vicinal area of the non-distributable area)(S14). If it is determined YES, then it is determined that the address of the user belongs to the area A, and the fee setting unit 14 sets a high fee (for example, the fee equal to or a little higher than the admission for the road show)(S15), there by returning control to (B) shown in FIG. 2. Thus, by setting a high distribution fee for the contents to the area near the movie theater showing the selected contents, the disorder in the commercial domain of the movie theater can be avoided. If NO, then control is passed to S16.

If NO in S14, the determination unit 13 determines that the address of the user belongs to the area B (S16). The fee setting unit 14 sets a low fee (S17), and control is passed to (B) shown in FIG. 2. Although the two settings of the fee, that is, a high fee and a low fee, are described above, the values of the fee can be sequentially set from highest to lowest by classifying and assigning the respective values to the areas based on the distance, the time required to reach, etc. from the address of the user to the location of the movie theater.

As described above, the address retrieved from the member information master 7 based on the ID of the user is classified into the same area, the vicinal area, the other area, etc. and assigned distribution prohibition, a high fee, a low fee, etc. with the location of the movie theater showing the selected contents or the non-distributable area taken into account, and the contents (for example, film) are stream-distributed, etc. Thus, a larger number of users (clients) can be provided with an opportunity of enjoying the contents by utilizing the member information without disordering the commercial domains of the existing movie theaters.

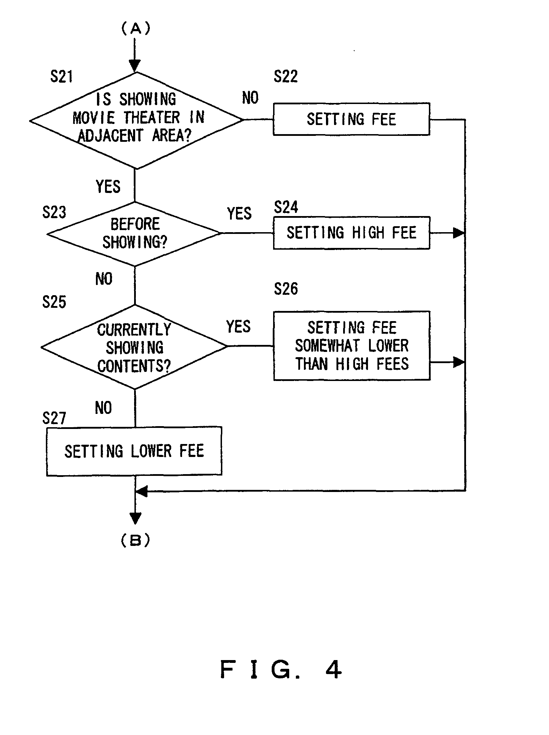

FIG. 4 is a flowchart (2) for detailed explanation of the present invention. The operations performed when a distribution fee is set are described in detail by referring to FIG. 4 based on when the contents are to be distributed, that is, before the movie theater shows the contents, during showing the contents, or after the movie theater shows the contents.

First, after S6 shown in FIG. 2, the determination unit 13 compares the address of the user retrieved from the member information master 7 based on the ID of the user with the location of the movie theater or the non-distributable area retrieved from the movie theater location master 5 based on the title of the contents (title of the film) selected by the user, thereby determining whether or not the address of the user belongs to the area A (adjacent area) (S21).

If NO in S21, it is determined that there are no movie theaters showing the contents selected by the user in the adjacent areas of the address of the user, and the fee setting unit 14 sets a normal fee (S22), and control is returned to (B) shown in FIG. 2. If YES, control is passed to S23.

If YES in S21, the master reference unit 12 refers to the showing movie theater master 4 using the name of the movie theater in the area adjacent to the address of the user obtained in S21, and retrieves the running term of the contents selected by the user. Then, the determination unit 13 determines based on the retrieved running term whether or not the contents selected by the user match the contents (for example, film) to be shown in the movie theater in the near future (S23). If YES, it is determined that the contents are being distributed before the running term, the fee setting unit 14 sets a high fee (S24), and control is returned to (B) shown in FIG. 2. If NO, control is passed to S25.

If NO in S23, then the determination unit 13 determines based on the running term whether or not the movie theater is showing the contents selected by the user (S25). If YES, it is determined that the film is being shown, the fee setting unit 14 sets a fee somewhat lower than the high fee set in S24 (S26), and control is returned to (B) shown in FIG. 2. If NO, then it is determined that the contents have been shown in the movie theater, the fee setting unit 14 sets a low fee (S27), and control is returned to (B) shown in FIG. 2 as described above.

Thus, when there are no movie theaters in the areas adjacent to the address retrieved from the member information master 7 based on the ID of the user, and if there are movie theaters in the adjacent area, then a normal fee, a high fee, a fee a little lower than the high fee, and a low fee are set for the period before the showing, the period during the showing, and the period after the showing, and the contents (for example, film) are stream-distributed when the user agrees with the payment. Thus, it is possible for a larger number of users (clients) to have the opportunity of enjoying the contents without disordering the commercial domain of the existing movie theaters.

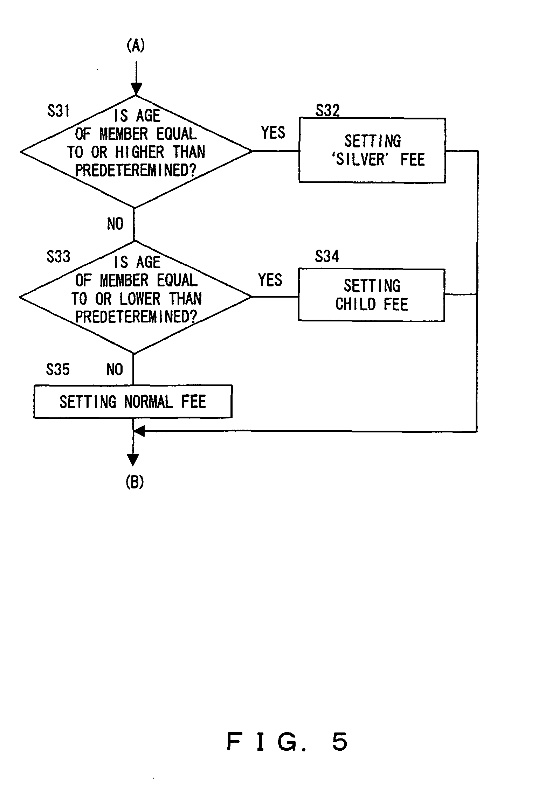

FIG. 5 is a flowchart (3) showing the detailed operations according to the present invention. The operations performed when the distribution fee is set based on the age of the member are described below in detail.

First, after S6 shown in FIG. 2, the determination unit 13 determines whether of not the age of the user retrieved from the member information master 7 based on the ID of the user is equal to or higher than a predetermined age (for example, 60 or older) (S31). If YES, it is determined that the age of the user is equal to or higher than the predetermined age (for example, 60 or older), and the fee setting unit 14 sets a 'silver fee' (for example, half the normal fee) as a distribution fee (S32), and control is returned to (B) shown in FIG. 2. If NO, then control is passed to step S33.

If NO in S31, the determination unit 13 determines whether or not the age of the member is a predetermined age or lower (S33). For example, the determination unit 13 determines whether or not the age of the member is equal to or lower than the predetermined age. If YES, it is determined that the age of the member is equal to or lower than the predetermined age (for example, 18 or lower), the fee setting unit 14 sets a 'child fee' (for example, half the normal fee) as a distribution fee (S34), and control is returned to (B) shown in FIG. 2. If NO, the fee setting unit 14 sets a normal fee as a distribution fee (S35), and control is returned to (B) shown in FIG. 2.

As described above, the 'silver fee' (for example, half the normal fee), the 'child fee' (for example, half the normal fee), the normal fee are respectively set for the age higher than a predetermined age (for example, 60 or higher), the age lower than a predetermined age (for example, 18 or lower), or other ages of the user retrieved from the member information master 7 based on the ID of the user, and when the user agrees with the payment, the contents (for example, film) are stream-distributed, etc. Thus, the member information can be utilized such that a larger number of users (clients) can be provided with an opportunity of enjoying the contents without disordering the commercial domain.

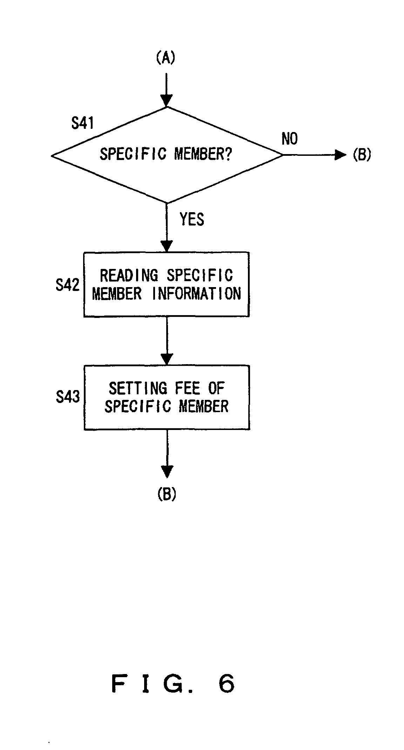

FIG. 6 is a flowchart (4) of the detailed operations according to the present invention. By referring to FIG. 6, the operations performed when a distribution fee is set based on the information about the member as to whether or not the member is a special member are described in detail.

First, after S6 shown in FIG. 2, the master reference unit 12 retrieves the special member master 8 shown in FIG. 11 using the user ID as a retrieval key. The determination unit 13 determines whether or not the user has been recorded as a special member (for example, a member who has recorded the information about a handicap level, the presence/absence of an infant, etc.) based on the retrieval result (S41). If YES, control is passed to S42. If NO, the normal fee is set as the fee, and control is returned to (B) shown in FIG. 2.

If YES in S41, it is determined that the user is a special member, and the fee setting unit 14 reads the special member information about the user from the special member master 8. The special member information can be, for example, the information about the handicap level and the presence/absence of an infant. Then, the fee setting unit 14 sets a predetermined low fee for a special member (S43) based on the special member information (for example, a handicap level, the presence/absence of an infant, etc.) read in S42, and control is returned to (B) shown in FIG. 2. Thus, when a user is a special member, it is possible to provide the contents (for example, film) at a fee lower than a normal member.

As described above, by searching the special member master 8 based on the ID of the user, a low fee is set for a special member according to the information about the special member information (for example, the information about a handicap level, the presence/absence of an infant, etc.), and stream-distributes the contents (for example, film) when the user agrees with the payment of the fee. Thus, a larger number of users (such as the handicapped, those having infants, etc. assigned a lower fee) can be provided with an opportunity to enjoy the contents utilizing the member information without disordering the commercial domain of an existing movie theater.

FIG. 7 shows an example of the data structure of a movie theater location master. The movie theater location master 5 records the following information shown in FIG. 7 with each piece of information associated with each other.
· Name of a movie theater
· Location
· Non-distributable area
· Area A (an adjacent area except the location or a non-distributable area)
· Area B (an area distant from area A)
· Others

The movie theater location master 5 records the information about the location and the commercial domain (covering range) of each movie theater. Based on the covering range recorded in the movie theater location master 5, the server 1 determines which the address of the user refers to, a non-distributable area, an area A, or an area B, and can set the prohibition of distribution, a high fee, or a low fee, thereby providing a larger number of users with an opportunity to enjoy film (contents) without disordering the commercial domain of an existing movie theater.

FIG. 8 shows an example of the data structure of a movie theater. In the film master 6, the following information is recorded for each of the contents with each piece of information associated with each other.
· Title of film (title of contents)
· Distribution term
· Name of showing movie theater
· Fee in area A
   · Example 1: 800 yen for age of 60 or over, 1,000 yen for age of 18 or over, and 500 yen for age under 18
   · Example 2: 1,100 yen for age over 18, and 600 yen for age under 18
· Fee in area B
   · Example 1: 500 yen
   · Example 2: 600 yen

By recording the above mentioned information as associated with each other in the film master 6, the server 1 can manage the contents in the distribution term, that is, in the distribution right retention term in which the contents can be distributed to the user through the network 22. Additionally, the fee setting unit 14 can set the corresponding fee shown in FIGS. 4 and 5 for the ages 60 or over, 18 or over, under 18, area A (adjacent area), area B (other areas), etc. Thus, a larger number of users can be provided with the opportunity to enjoy film (contents) at a lower fee without disordering the commercial domain of the existing movie theaters showing the film.

FIG. 9 shows an example of the data structure of a member information master. The member information master 7 contains the following information about each member.
· member ID
· name
· address
· age
· gender
· others

By recording the information about each member in the member information master 7, the server 1 can retrieve the address, the age, etc. of the user from the member information master 7 and set the corresponding fee according to the information with a larger number of users provided with the opportunity to enjoy film (contents) at a lower fee without disordering the commercial domain of the existing movie theaters showing the film.

FIG. 10 shows an example of the data structure of a showing movie theater master. The showing movie theater master 4 contains the following information about the contents shown in the movie theater.
· name of a movie theater
· title of film
· running term
· others

By recording the information about the contents shown in each movie theater in the showing movie theater master 4, the server 1 can retrieve the movie theater showing the film (contents) selected by the user from the showing movie theater master 4 and set the corresponding fee according to the information with a larger number of users provided with the film (contents) at a lower fee without disordering the commercial domain.

FIG. 11 shows an example of the data structure of a specific member master. The special member master 8 contains the following information about a member recorded as a specific member.
· user ID (specific member ID)
· name
· address
· age
· handicap level
· presence/absence of a child
· others

By recording the information about a specific member in the special member master 8, the server 1 can set a low fee if the user requesting the distribution of film (contents) is a specific member with a larger number of users provided with the film (contents) without disordering the commercial domain of the existing movie theater, etc.

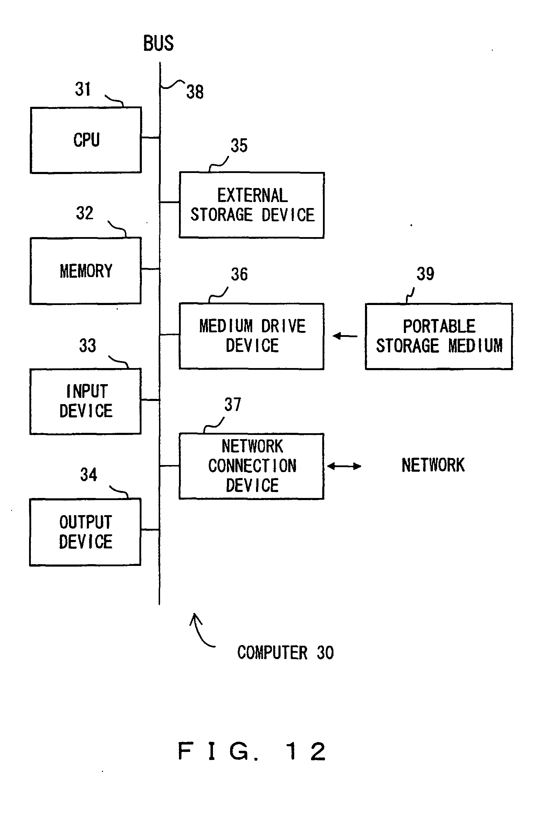

The server 1 and each of the terminals 10 and 23 can be configured using the computer as shown in FIG. 12. A computer 30 shown in FIG. 12 comprises a CPU 31, memory 32, an input device 33, an output device 34, an external storage device 35, a medium drive device 36, and a network connection device 37. These components are interconnected through a bus 38.

The memory 32 comprises, for example, ROM (read only memory), RAM, etc., and stores a program and data for use in a process. The CPU 31 performs a necessary process by executing a program using the memory 32.

Each component configuring the above mentioned server 1 is stored as a program in a specific program code segment of the memory 32. The input device 33 is, for example, a keyboard, a pointing device, a touch panel, etc., and is used in inputting an instruction and information from a user. The output device 34 is, for example, a display, a printer, etc., and is used in outputting an inquiry, a process result, etc.

The external storage device 35 is, for example, a magnetic disk device, an optical disk device, a magneto-optical disk device, etc. The above mentioned program and data are stored in the external storage device 35 to load them into the memory 32 for use as necessary.

The medium drive device 36 drives a portable storage medium 39, and accesses the contents stored on it. The portable storage medium 39 can be a computer-readable storage medium such as a memory card, a memory stick, a flexible disk, CD-ROM (compact disc read only memory), an optical disk, a magneto-optic disk, a DVD (digital versatile disk), etc. The above mentioned program and data can be stored on the portable storage medium 39 for use as necessary by loading them into the memory 32.

The network connection device 37 communicates with other devices through the network 9 or 22 (circuit) and converts data for communications, and can receive the above mentioned program and data from an external device.

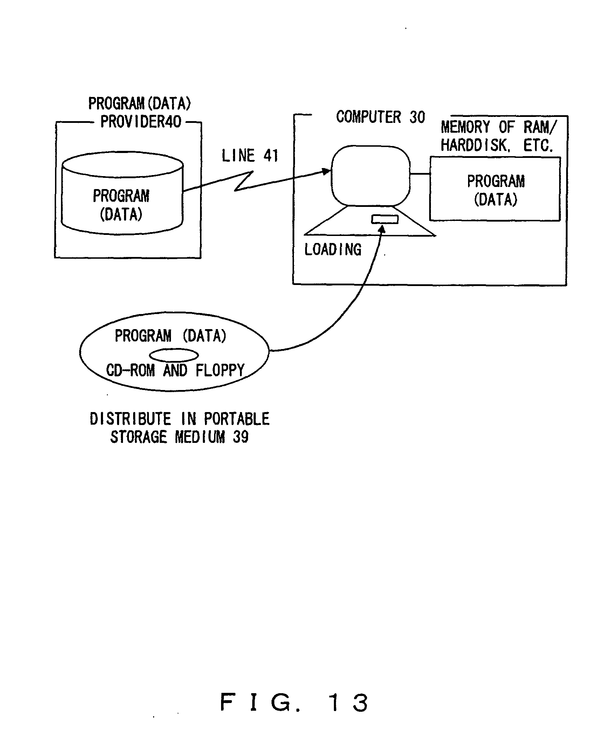

FIG. 13 shows a computer-readable storage medium and a transmission signal capable of providing the computer 30 shown in FIG. 12 with a program and data.

The present invention can also be configured as a computer-readable portable storage medium 39 used in a computer to direct it to perform the functions similar to those realized by each of the above mentioned configurations of the present invention.

In the embodiments, a program used to direct a computer to perform the process similar to that performed by the server 1 and the terminals 10 and 23 can be stored in advance on the computer-readable portable storage medium 39, read by the computer 30 from the portable storage medium 39 as shown in FIG. 13, temporarily stored in the memory 32 of the computer 30 or the external storage device 35, and read and executed by the CPU 31 of the computer 30.

Furthermore, a transmission signal to be transmitted through a line 41 (transmission medium) when a program is downloaded into the computer 30 by a program (data) provider 40 can also direct a general-purpose computer to perform the functions corresponding to each of the devices explained by referring to the above mentioned embodiments of the present invention.

The embodiments of the present invention have been explained above, but the present invention is not limited to the above mentioned embodiments, but can be a number of variations. For example, some of the methods of setting a fee explained above can be optionally combined with each other.

Furthermore, for example, in a commercial domain of contents (pay film) to be distributed to a terminal of a user through a network such as a local or small TV station, CATV (cable TV), etc. within a limited area, the present invention can be applied to set the prohibition of distribution, a high fee, a low fee, etc. for the contents for each of the areas within the commercial domain, in the vicinity (the above mentioned area A), in other domains, etc. Thus, a larger number of user can be provided with the opportunity to enjoy the contents by utilizing the member information without disordering the commercial domain of an existing local or small TV station, CATV, etc.

Additionally, each unit and each master configuring the server 1 realize a series of business processes by operating in cooperation with each other. These units and DBs can be provided in the same server or in different servers to operate in cooperation with each other through a network.

### Industrial Applicability

According to the present invention, when contents are selected or specified by a user, it can be determined whether or not the contents can be distributed according to the information, etc. about a member (member information) and about a movie theater, and a fee can be set, thereby providing a larger number of users with an opportunity to enjoy contents by utilizing the member information without disordering an existing movie theater, etc.

## Claims

**1.** A distributing method for distributing contents through a network, comprising steps of:
recording a showing place in which the contents are shown;
recording a destination place to which the contents are distributed; and
determining whether or not the contents can be distributed according to information about the showing place in which the recorded contents are shown and information about the destination place to which the recorded contents are distributed.

**2.** The method according to claim 1, further comprising a step of:
in said step of determining whether or not the contents can be distributed, prohibiting the distribution of the contents when an area to which the showing place belongs matches an area to which the destination place belongs or when the destination place is included in a vicinal area of the showing place.

**3.** The method according to claim 1 or 2, further comprising a step of:
setting a distribution fee for the contents according to the information about the destination place and the information about the showing place when it is determined that the contents can be distributed in the step of determining whether or not the contents can be distributed.

**4.** The method according to any of claims 1 through 3, further comprising a step of:
setting a distribution fee for the contents depending on a running term of the contents in the showing place of the contents when it is determined that the contents can be distributed in the step of determining whether or not the contents can be distributed.

**5.** The method according to any of claims 1 through 4, further comprising a step of:
recording information about a user who receives distribution of the contents; and
setting a distribution fee of the contents according to the recorded information about the user when it is determined that the contents can be distributed in the step of determining whether or not the contents can be distributed.

**6.** The method according to claim 5, wherein
the information about the user relates to whether or not a user can receive a discount on a fee.

**7.** A method for receiving distribution of contents, comprising steps of:
specifying distribution of the contents; and
receiving a determination result as to whether or not the contents can be distributed according to information about a showing place in which the specified contents are shown and information about a destination place to which the contents are distributed.

**8.** A distribution apparatus for distributing contents through a network, comprising:
determination means for determining whether or not the contents can be distributed according to information about a showing place in which the contents are shown and information about a destination place to which the contents can be distributed, and determining whether or not the contents can be distribute; and
distribution means for distributing the contents to the destination through the network.

**9.** A computer-readable storage medium storing a program used to direct a computer to control distribution of contents through a network, comprising steps of:
determining whether or not the contents can be distributed according to information about a showing place in which the contents are shown and information about a destination place to which the contents can be distributed, and determining whether or not the contents can be distribute; and
distributing the contents to the destination through the network.

**11.** A program for directing a computer to control distribution of contents through a network, comprising steps of:
determining whether or not the contents can be distributed according to information about a showing place in which the contents are shown and information about a destination place to which the contents can be distributed, and determining whether or not the contents can be distribute; and
distributing the contents to the destination through the network.

**12.** A computer data signal embodied in a carrier wave storing a computer program used to direct a computer to control distribution of contents through a network, comprising steps of:
determining whether or not the contents can be distributed according to information about a showing place in which the contents are shown and information about a destination place to which the contents can be distributed, and determining whether or not the contents can be distribute; and
distributing the contents to the destination through the network.

**13.** A computer program product having a computer-readable storage medium storing a program code module used to direct a computer to control distribution of contents through a network, comprising:
a program code module of determining whether or not the contents can be distributed according to information about a showing place in which the contents are shown and information about a destination place to which the contents can be distributed, and determining whether or not the contents can be distribute; and
a program code module of distributing the contents to the destination through the network.
